# EUROPEAN PATENT SPECIFICATION

(11) **EP 0 739 573 B1**
(45) Date of publication and mention of the grant of the patent: **14.11.2001**
(21) Application number: 94924312.5
(22) Date of filing: 11.08.1994
(51) Int. Cl.: H04Q 7/24

(54) **METHOD AND EQUIPMENT FOR ADAPTING CT2 CALLS FOR AN ISDN SUBSCRIBER LINE**
VERFAHREN UND EINRICHTUNG ZUR ANPASSUNG VON CT2-RUFEN AN EINE ISDN TEILNEHMERLEITUNG
PROCEDE ET APPAREIL D'ADAPTATION D'APPELS DE SYSTEME CT2 A UNE LIGNE D'ABONNE RNIS

(30) Priority: 12.08.1993 FI 933575
(43) Date of publication of application: 30.10.1996
(73) Proprietor: Nokia Networks Oy, 02150 Espoo (FI)
(72) Inventor: HURME, Harri, FIN-02100 Espoo (FI); HEIKKILÄ, Juha, FIN-02210 Espoo (FI)
(74) Representative: Holmström, Stefan Mikael
(86) International application number: FI9400349
(87) International publication number: WO9505719

(56) References cited:
- WO-A-91/10333
- US-A- 5 208 812
- US-A- 5 285 443

## Description

The invention relates to a method according to the preamble portion of attached claim 1 and to an equipment according to the preamble portion of attached claim 7 for adapting CT2 calls for an ISDN subscriber line.

The second generation of the Cordless Telephone CT2 was originally defined by the British standard BS 6833 (Reference [1], the list of references is at the end of the specification part), and the radio parts of the system by the specification MPT 1334 (Reference [2]). The problem with these original standards was the poor definition of the protocol between the handset and the base station. When the incompatible radio link protocols developed by the different manufacturers began to be problematic, a committee was set up under the direction of the DTI (United Kingdom Department of Trade and Industry), the purpose of which was to define a common radio link protocol CAI (Common Air Interface). This is done in the specification MPT 1375 of the Ministry of Posts and Telecommunications) (Reference [3]).

The radio link protocol of the CT2 system will now be described as background information for the more detailed description of the invention to be presented below.

The CT2 system has been assigned the frequency range between 864 and 868 MHz, which is divided into 100-kHz channels. The 4 MHz band will thus contain 40 radio channels. The maximum transmission power is only 10 mW, which allows long operation periods on one hand and reduces the price of the telephone on the other.

The CT2 system employs a two-level FSK modulation (Frequency Shift Keying) shaped by a Gaussian filter. The frequency deviation of 14.4 - 25.2 kHz above the center frequency corresponds to a binary one, whereas the deviation of 14.4 - 25.2 kHz below the center frequency corresponds to a binary zero.

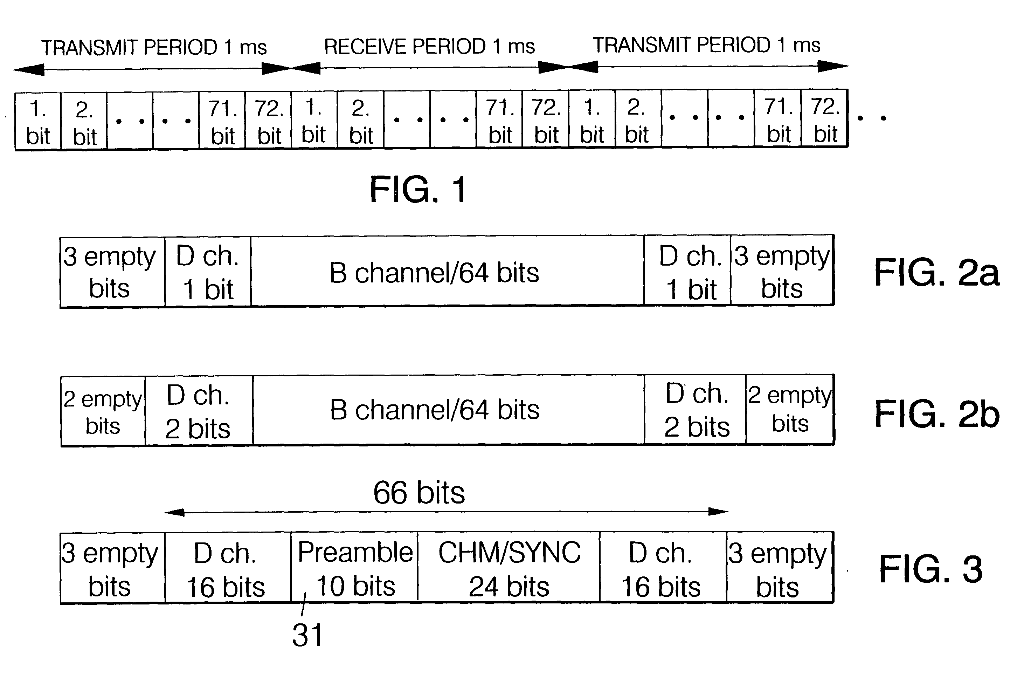

In the CT2 system, transmission and reception take place at the same frequency. To establish a two-way connection between the base station and a handset, transmission alternates with reception at the frequency of 500 Hz. This method is known as Time Division Duplex (TDD). When the alternation frequency of 500 Hz is used, the length of both the transmission and reception period is 1 ms. The bit rate is 72 kbit/s in the CT2 system, whereby one transmission period contains 72 bits. However, a time of four bits of the transmission period is reserved for turning off the transmitter and for setting the frequency of the receiver, so that no more than 68 bits of payload data can be transmitted per one period. Synchronization required by the transmission connection is performed by synchronizing the handset to the transmit/receive (TX/RX) alternation of the base station and then to the appropriate bit rate. This will be explained more closely below. The principle of the transmit/receive alternation between the base station and the handset is illustrated in Figure 1.

The radio link protocol may also be dealt with by dividing the different operations on the basis of the OSI layer to which they belong. (The OSI model (Open System Interconnection) is a model defined by the ISO (International Standards Organization), which specifies the way of communication of open systems.)

The function of layer 1 of the OSI model is the selection of a suitable radio channel and the establishment of a two-way digital connection. In signalling, the main option is the establishment of a point-to-point connection; however, on establishing a connection, it is possible for a number of base stations to page handsets at the same time, and on the other hand, more than one base station is able to respond to the page of a handset. Radio channels are selected dynamically in the CT2 system, i.e. a channel having a sufficiently low noise level is selected automatically on establishing a connection. Due to the dynamic channel selection, no actual frequency planning is required when a network is being set up.

The 72-kbit/s transmission capacity available on an individual radio channel is divided between three different information channels. (It is to be emphasized that information channels, not radio channels, are referred to herein). The information channels are
a) signalling channel or D channel
b) speech and data transmission channel or B channel
c) synchronization channel or SYN channel.

The transmission requirements of the different channels vary at different stages of a call, and therefore they can be assigned a variable amount of transmission capacity. In certain situations, one of the channels may be absent. Such different channel combinations are known as multiplexes, the CT2 system utilizing three such multiplexes: multiplex 1, multiplex 2, and multiplex 3. In addition, two variations of multiplex 1 are available (multiplex 1.2 and multiplex 1.4).

The CT2 system uses the B and D channels in the same way as they are used generally in other telecommunications applications, but the SYN channel is specific to the CT2 system. The SYN channel (to be described more closely below) is used in multiplexes 2 and 3, when the bit and TX/RX synchronization have not necessarily been achieved. The channel comprises a so-called preamble, which consists of alternations of a binary one and a binary zero during ten bits. The preamble is followed by a special 24-bit code word, which marks the radio channel to be used in connection establishment. The code words always have a predetermined position in the transmission period, whereby the code word can be used for synchronizing the transmit/receive alternation. There are four different code words, two of which, CHMP and CHMF, are used when a link connection is attempted to be opened on a radio channel. CHM stands for Channel Marker, and the letters F and P indicate whether the transmitting party is a Fixed part (i.e. base station) or a Portable part (i.e. handset). The other two code words are SYNCP and SYNCF, and they indicate to the other communicating party that synchronization has been achieved.

The code words CHMP and CHMF are each other's inverted values, and so are SYNCP and SYNCF. When a handset scans a radio channel, looking for the CHMF or SYNCF word, it cannot detect a code word transmitted by another handset. The same applies to the base station. The code words are selected so that they have the minimum auto-correlation and at the same time the minimum cross-correlation with other frequently occurring bit patterns.

Multiplex 1 is used when the handset and the base station are in the speech state, i.e. a connection has been established, and the bit and TX/RX synchronization have been achieved. The SYN channel is not transmitted at all in multiplex 1, i.e. the connection has to be re-initialized if synchronization is lost. Two variations of multiplex 1 are used: multiplex 1.2, described in Figure 2a, and multiplex 1.4, described in Figure 2b. In both of them, the length of the B channel is 64 bits in one period, whereas the length of the D channel varies. D channel is transmitted in multiplex 1.2 at a 1-kbit/s rate, i.e. one bit at the beginning of the period and one at the end. In multiplex 1.4, the rate of the D channel is double, i.e. 2 kbit/s, whereby two bits are transmitted at the beginning and two bits at the end. The B channel is used for speech transmission by inverting, in a sequence of bits, certain bits defined in the specification. By the use of this method, the occurrence of ones and zeros will be sufficiently arbitrary. No actual ciphering of speech is used in the CT2 system. There is no error detection or correction on the B channel.

The interchange of the base station and handset identities is performed on the D channel, thus ensuring the maintenance of the radio connection. On the D channel, errors are corrected by re-transmissions, and if the error ratio rises excessively in view of the speech transmission, the radio channel can be changed without interrupting the call. Error detection and other overhead information reduce the actual transmission capacity of the D channel to about one half of the above-mentioned values, 1 kbit/s or 2 kbit/s.

A guard time of two (multiplex 1.2) or three (multiplex 1.4) bits is provided at the beginning of each period. The guard time also determines, through the maximum delay, the maximum coverage of the cell.

All CT2 equipments have to know multiplex 1.2, whereas the use of multiplex 1.4 is voluntary.

Multiplex 2, the structure of which is shown in Figure 3, is used at the call establishment stage, when the base station wishes to establish a connection to a handset, or when a handset responds to a call establishment request made by the base station. Multiplex 2 thus uses the D channel and the SYN channel. When the base station wishes to establish a connection to a handset, it has to transmit its own identity and at the same time ensure that the handset is able to synchronize to the base station. For this reason, the above-mentioned 10-bit preamble 31 is transmitted by multiplex 2, which allows bit synchronization, and then the above-mentioned 24-bit CHM code word is transmitted, which allows the transmit/receive alternation to be synchronized. After the handset has synchronized to the base station and received the base station identity, it transmits the SYNCP word on the SYN channel. The base station identity LID (Link Identification Code) is transmitted with multiplex 2 on the D channel, and the handset identity PID (Portable Identification Code) is transmitted in the other direction. With multiplex 2, the data speed of the D channel is, as appears from Figure 3, 16 kbit/s, of which about one half will be available for use after error detection and other overhead information.

When a handset initiates a connection to the base station, problems occur in finding the right bit and TX/RX synchronization, as the base station is not able to synchronize to the handset. When frequency-division multiplexing is used, the base station has to contain a separate radio for each connection. A single radio that is not in synchronism with the others is already enough to block the reception of the other radios when it transmits. For this reason, the handset should be able to find the right synchronization. In order that the right synchronization could be found, multiplex 3 is used when a handset initiates a connection to the base station.

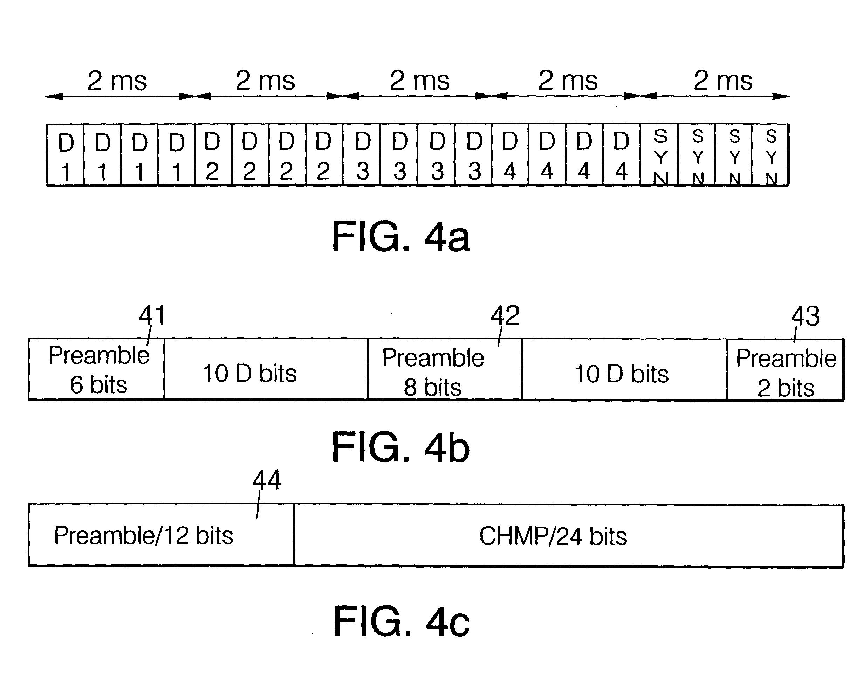

Multiplex 3 does not follow the normal 500 Hz TX/RX alternation, but when the handset wishes to initiate a connection, it transmits a 10-ms continuous transmission shown in Figure 4a, and then listens for 4 ms. If no response is received, the handset repeats the above-mentioned sequence for five seconds. Multiplex 3 contains the D channel and SYN channel. The D channel is divided into four 20-bit periods, each of which is repeated four times. In Figure 4a, these periods are indicated with the references D1 to D4. Each one of the periods is similar to that shown in Figure 4b, i.e. a 6-bit first preamble portion 41 is transmitted first in each one of the periods D1 to D4, and then, after 10 D bits, a 8-bit second preamble portion 42 (1, 0, 1, 0...), whereafter 10 further D bits are transmitted, and finally, a 2-bit third preamble portion 43. After the D-channel periods, the SYN channel is transmitted, also four times in succession (cf. Figure 4a). As shown in Figure 4c, the SYN channel consists of a 12-bit preamble portion 44 followed by a 24-bit code word CHMP. This multiplex structure ensures that all of the information will fall into the reception period of the base station. The D channel contains a synchronization word, a handset identity PID, and the identity LID of the base station to which a connection is to be established. After the base station has received and interpreted the received message, it attempts to establish a connection by transmitting a response to the handset with multiplex 2.

The function of layer 2 of the OSI model is error detection and correction on the D channel, maintenance of a radio connection, identification of the other communicating party, and forwarding of messages over the radio link. Layer 2 also takes care of data transmission to layer 3. Error detection is performed by the CRC (Cyclic Redundancy Check) method, and errors are corrected by repeated transmission of the packet.

Data is transmitted on the D channel in packet format, and the transmission is based on the specification MPT 1317 (Reference [4]), which defines generally the way in which packets to be transmitted over a radio link should be assembled. In the CT2 system, transmission on the D channel starts with a 16-bit synchronization word followed by an ACW word (Address Code Word) and at the most five DCW words (Data Code Word). The code words are 64 bits in length, and the use of DCW code words is optional. The more detailed content of the code words is described in Reference [3], so the code words will not be described more fully herein.

Layer 3 of the OSI model transmits actual payload information to the other end of the radio link. Such information includes e.g. the numbers 0 to 9 and the characters # and * inputted by the user. In the other direction, it is possible to transfer e.g. messages from a PBX directly to the display of a handset. From the viewpoint of signalling layer 3, layer 2 only establishes an interference-free transmission connection to the other end of the radio link.

Speech encoding utilizes adaptive differential pulse code modulation (ADPCM) at a rate of 32 kbit/s. The algorithm to be used is defined in the CCITT recommendation G.721, and it enables data transmission at the rate of 4.8 kbit/s, and the use of a telefax. If the power consumption of the handset is to be limited, it is possible to compromise over the recommendation, but the quality of speech should, however, meet the requirements specified in Section 2 of the standard BS 6833 (Reference [1]).

Transmission of information and the operation of the different multiplexes in the CT2 system have been described above at different stages of a call. Call establishment, however, will not be described more fully herein, as the present invention is not concerned with call establishment as such. Reference [5], for instance, gives an overall picture of call establishment.

The known applications of the CT2 telephone system described briefly above, however, also have several drawbacks, which may have contributed to the fact that the commercial success of the system has not been as great as initially expected.

In the prior art CT2 telephone system, the CT2 base station connection, for instance, has been implemented similarly as a telephone connection by connecting the base station to an ISDN subscriber line in place of a conventional ISDN terminal equipment. The base station thus converts encoded speech used over the radio link into a conventional format, such as a PCM code. Thus, the number of CT2 calls that can be transmitted to the ISDN subscriber line is not greater than that of conventional calls even though the capacity of the speech encoding used by the CT2 system is double as compared with conventional PCM, for instance.

The object of the present invention is, in fact, to provide an improvement with respect to the drawback mentioned above. This is achieved by a method and an equipment according to the invention, of which the method is characterized by what is disclosed in the characterizing portion of attached claim 1, and the equipment, in turn, by what is disclosed in the characterizing portion of attached claim 7.

The idea of the invention is to use the B channel of the subscriber line for data transmission during connection establishment by shaping the predetermined, fixed bit pattern of the SYN channel contained in multiplex 2 used in the CT2 telephone system in such a way that the SYN and D channels can be fitted in the B channel as such. In practice, this means that the fixed bit pattern is shortened by at least two bits, so that it can be fitted in the B channel. When data is transmitted to the radio link, these bits, of course, have to be restored in order that a standard handset could operate with the base station.

The solution according to the invention allows a maximum of four speech connections to be transmitted to the ISDN basic access at all call stages, so that the capacity of the subscriber line can be utilized more efficiently than previously.

In the following the invention and its preferred embodiments will be described more fully with reference to the examples shown in Figures 5 to 10b in the attached drawings, in which
Figure 1 illustrates transmit/receive alternation in the CT2 system;
Figure 2a illustrates the structure of multiplex 1.2 used in the CT2 system;
Figure 2b illustrates the structure of multiplex 1.4 used in the CT2 system;
Figure 3 illustrates the structure of multiplex 2 used in the CT2 system;
Figure 4a illustrates the structure of multiplex 3 used in the CT2 system;
Figure 4b illustrates the structure of D channels transmitted in multiplex 3 used in CT2 system;
Figure 4c illustrates the structure of SYN channels transmitted in multiplex 3 used in the CT2 system;
Figure 5 illustrates a preferred system configuration where the method according to the invention can be applied;
Figure 6 is a block diagram illustrating a timing and radio unit connected at the subscriber end of a subscriber line in the system according to Figure 5;
Figure 7 illustrates the frame structure of data transmitted between a base station and a timing and radio unit;
Figure 8 illustrates the multiframe structure of data transmitted between a base station and a timing and radio unit;
Figure 9a illustrates the first shaping means of the timing and radio unit in more detail, the shaping means being used for shortening the data of the SYN channel when multiplex 2 is used at the call establishment stage;
Figure 9b illustrates the operation of the first shaping means shown in Figure 9a;
Figure 10a illustrates the second shaping means of the timing and radio unit in more detail, the shaping means being used for lengthening the data of the SYN channel when multiplex 2 is used at the call establishment stage; and
Figure 10b illustrates the operation of the second shaping means shown in Figure 10a.

As the ISDN basic access is clearly the most widely used subscriber access to a public telephone network, the preferred embodiment of the invention is such that the timing and radio unit is connected e.g. through an ISDN-U interface to the ISDN basic access. Before the system according to the invention is described in more detail, the above concepts will be explained briefly.

The ISDN-U is an interface associated with the subscriber line connection; its standardisation is specified by CCITT. There are several draft recommendations concerning the U-interface. One of them defines the interface by the 2B1Q line code.

The interface between the ISDN subscriber and the network offers channels of different types for the transmission of information between the subscriber and the network. The ISDN recommendations include B, D and H channels. The B channel is a 64-kbit/s channel provided with timing and applicable e.g. in speech transmission (64 kbit/s) in compliance with the CCITT recommendation G.711, or for the transmission of wide-band speech coded to 64 kbit/s. The D channel is primarily intended for use as a signalling channel over circuit-switched connections, but it may also be used in the transmission of packet-switched data. The rate of the D channel is 16 kbit/s or 64 kbit/s, depending on the application. H channels in turn are wide-band channels provided with timing.

Various channel structures are obtained for ISDN user accesses by combining the channels. The channel structure of the basic access is 2B+D, and that of the primary access 30B+D.

As the channel structure of the basic access is of the format 2B+D, two B channels (both 64 kbit/s) and one D channel (16 kbit/s) can be connected to the ISDN subscriber line. There are thus two separate speech connections and one signalling channel or packet-switched data transmission connection available for the subscriber.

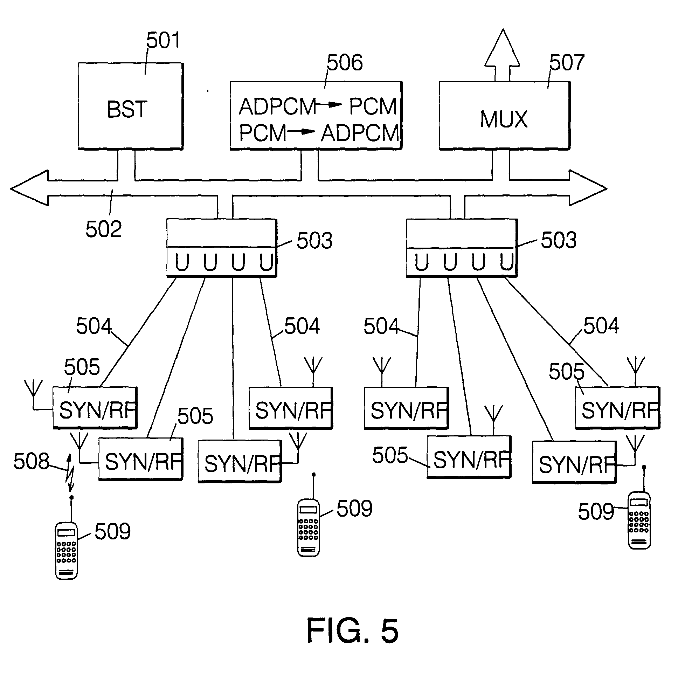

Figure 5 shows a preferred system configuration where the method and equipment according to the invention can be utilized. This system is the object of a parallel International Patent Application WO95/05720, which is referred to particularly as regards to a more accurate description of the problems forming the basis of the system configuration. The system comprises a base station 501 connected e.g. to the same bus 502 as a subscriber network ISDN-U subscriber access board 503 (or boards 503), and timing and radio units 505, of which there are several, in this case eight, per one base station at the subscriber ends of conventional subscriber lines 504. The base station 501 is a CT2 base station known *per se*, but its radio parts have been transferred into the timing and radio unit 505 provided at the subscriber end of the subscriber line; the timing and radio unit will be described more closely below. In addition, due to the system according to the invention, the CT2 specification is applied in the base station in a slightly modified form with regard to the SYN channel of multiplex 2, as will be described below. The base station may also be provided with features known *per se* from cellular networks, such as the roaming and handover functions, which are local functions, i.e. operative within the area of a single base station 501.

An ADPCM/PCM coder 506 is also connected to the system bus 502. It takes care of speech channel coding and decoding of a coded speech channel into a normal PCM speech channel. (The ADPCM coder operating at 32 kbit/s is defined in the CCITT recommendation G.721.) The coder may also be included in the base station 501. Moreover, the same system bus 502 has an associated device transferring a call to a higher level in the network, such as a 2-Mbit/s or 8-Mbit/s multiplexer 507.

The processing of the CT2 protocol (call processing) is thus performed in the base station 501, which, in practice, is able to service e.g. 30 simultaneous CT2 calls. Each timing and radio unit 505 at the end of the subscriber line contains a radio part and a digital part shaping CT2 calls into the 2B+D format corresponding with the ISDN basic access, in order that the calls could be passed over the subscriber line. The radio parts communicate with handsets 509 via a radio link 508; there are typically a plurality of handsets within a cell formed by a single timing and radio unit 505.

In the example shown in Figure 5, each timing and radio unit 505 is positioned in the ISDN basic access in place of an ISDN terminal equipment (such as an ISDN telephone), whereby the subscriber line services the timing and radio unit. It is thus possible to transfer four simultaneous CT2 calls through the ISDN-U interface, when the ADPCM/PCM coder is also positioned at the exchange end of the subscriber line. The transmission capacity required by one CT2 call is 32+4 kbit/s (in both directions), so that the transmission capacity required by four simultaneous calls is 4 x 36 kbit/s = 144 kbit/s, which corresponds to the transmission capacity of the ISDN basic access (2B+D, 2x64 kbit/s + 16 kbit/s). In the ISDN basic access, the delays of the B and D channels may differ from each other, which makes it difficult to use the basic access as a 144-kbit/s channel. The solution according to the invention, however, allows the B and D channels to have different delays without causing interference to the operation of the system. If the delays of the B and D channels are different, the magnitude of the delay difference need not be determined, as the solution according to the invention does not require that the basic access should be used as a transparent 144-kbit/s channel. In the speech state, speech is transmitted on the B channel and signalling on the D channel; with multiplex 2, signalling is transmitted on the B channel and the D channel is empty.

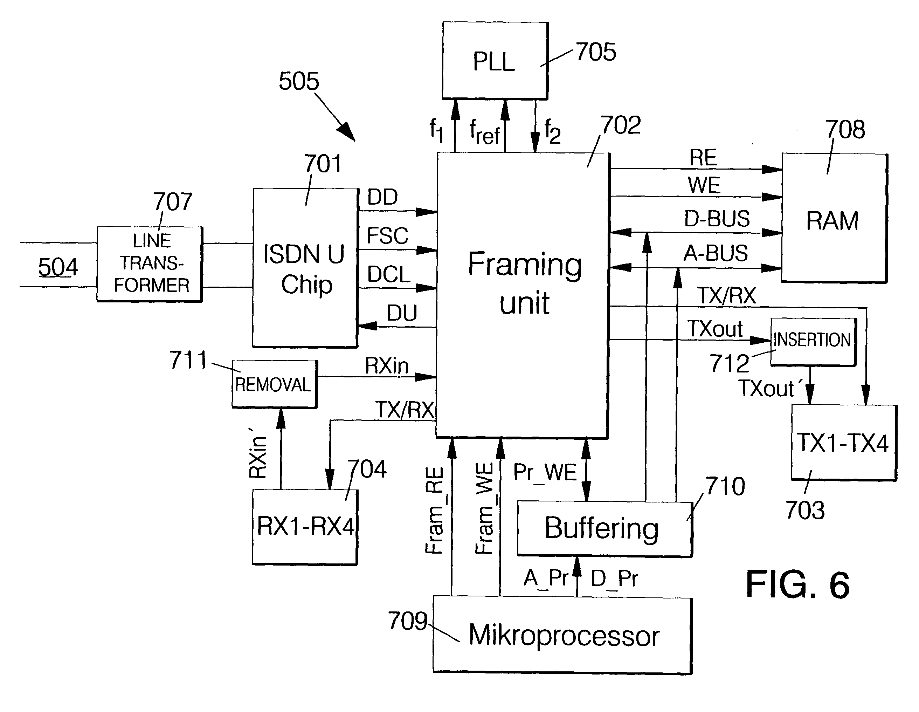

Figure 6 illustrates an individual timing and radio unit 505 in more detail. The unit positioned at the subscriber end of the subscriber line 504 comprises five main blocks, namely: an interface unit 701, which takes care of interfacing to the ISDN subscriber line, a digital framing unit 702, which converts data between two different formats; radio transmitters 703, and radio receivers 704; and a phase lock loop 705, which generates clock pulses needed by the framing unit 702. The timing and radio unit further comprises an ac-coupled line transformer 707, which is connected between the interface unit 701 and the subscriber line 504; a RAM memory 708 used as a buffer memory between the radio parts and the ISDN-U interface; and a microprocessor 709 having its data bus connected to the framing unit 702 (to its data bus), and controlling the operations of the timing and radio unit. Both the microprocessor and the framing unit use the RAM memory 708, wherefore a separate buffering circuit 710 is provided between the microprocessor and the framing unit. According to the invention, data from the receivers 704 is processed in a first shaping circuit 711 before it is switched to the framing unit; correspondingly, data from the framing unit 702 is processed in a second shaping circuit 712 before it is switched to the transmitters 703. In practice, the timing and radio unit further comprises a power supply, which however is not shown for the sake of clarity. Power needed by the unit may also be supplied through the subscriber line, whereby no separate power supply is needed. The function of the timing and radio unit is, on one hand, to receive data from the subscriber line 504 and store it in an appropriate format in the buffer memory 708 to wait for the start of transmission, and on the other hand, to receive transmission from the radio and store it in the buffer memory 708 to wait for its transmission over the subscriber line. In addition to this, the timing and radio unit synchronizes its operation in accordance with synchronization signals passed over the ISDN-U interface.

The interface unit 701 forming the ISDN-U interface of the base station may be made up e.g. of a commercial special circuit, which converts the 2B1Q line code of the U interface into the GCI (General Circuit Interface) format, and *vice versa.* This circuit may be e.g. the IDSN-U-PEB 2091 circuit of Siemens. The circuit contains adaptive echo suppression, and it is able to regenerate the data clock and frame synchronization. In Figure 6, the data clock signal is indicated with the reference DCL, and the frame synchronization signal with the reference FSC. In addition to the normal 2B+D transmission (144 kbit/s), this circuit transmits a 4-kbit/s control channel, which, for instance, provides information on whether the transmission has been successful by the use of the CRC check.

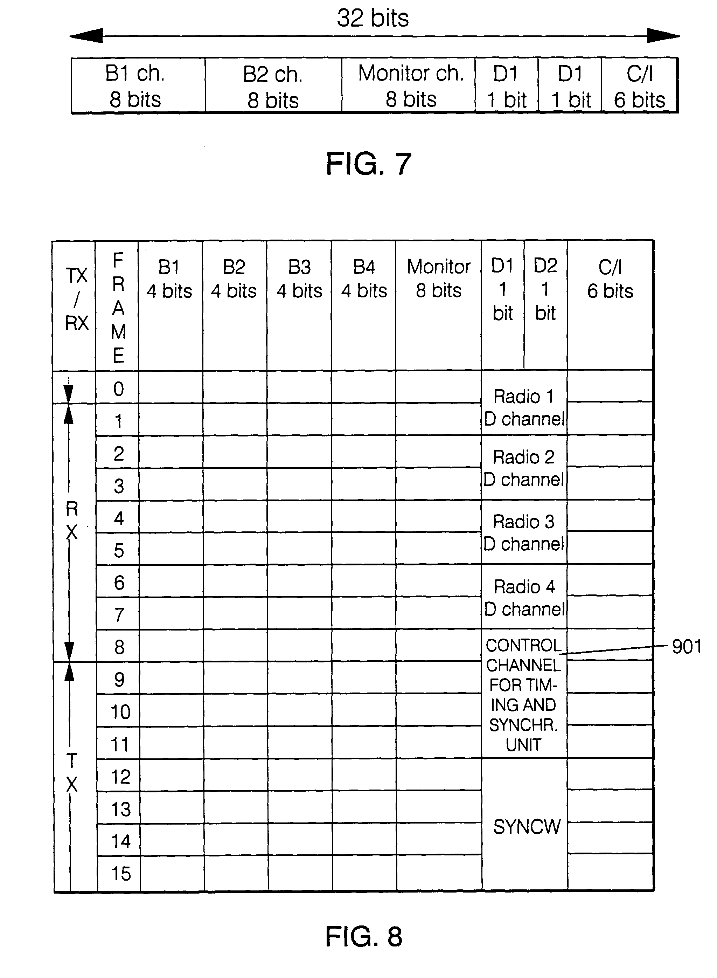

The above-mentioned GCI is an open interface specification developed by Alcatel, Italtel, GPT, and Siemens together. Figure 7 shows the structure of a GCI frame. The GCI frame is 32 bits in length, and its frame rate is 8 kHz. The duration of one frame is thus 125 µs and bit rate 256 kbit/s. The frame first comprises two B channels (B1 and B2), each having eight bits per frame. They are followed by the 8 bits of the monitoring channel and then by two D channels (D1 and D2), one bit for each channel. The frame is terminated by a 6-bit control block, through which it is possible to transfer e.g. control data to devices connected to the GCI bus. The GCI will not be described more closely here, but Reference [6], for instance, describes its contents in detail.

The framing unit 702 shown in Figure 6 is a digital block which receives data DD from the interface unit 701 forming the U interface, and transmits it to the radio transmitter 703 in accordance with the slightly modified CT2 format. This signal is indicated by the reference TXout in the figure. In the shaping unit 712 (to be described more fully below), the CT2 format is corrected so that it complies fully with the standard. On the other hand, the framing unit receives data RXin from the radio receivers 704, which data has first been shaped in the shaping circuit 711, and then transmits it to the interface unit 701. The data to be transmitted from the framing unit to the interface unit is indicated with the reference DU. The main function of the framing unit 702 is thus the change of protocol from GCI to CT2, and *vice versa.* Its other functions include monitoring the synchronization of transmission. The unit further contains the management of the RAM buffer memory 708.

The phase-locked loop 705 generates the clock pulses required by the framing unit 702 from a clock signal DCL applied to the framing unit across the U interface, a basic frequency f₁ to be applied to the phase comparator of the phase lock being derived from the clock signal DCL by dividing. A clock signal obtained from the oscillator of the phase lock is indicated with the reference f₂. A reference frequency f_{ref} to be applied to the phase lock is obtained from this signal by dividing.

The framing unit 702 controls writing into the buffer memory 708 by a signal WE (Write Enable) and reading from the buffer memory by a signal RE (Read Enable). A data bus between the framing unit 702 and the RAM memory 708 (over which data is transmitted) is indicated with the reference D-BUS, and an address bus therebetween (over which the read and write addresses are given) correspondingly with the reference A-BUS.

A clock signal TX/RX is connected from the framing unit to both the transmitters 703 and the receivers 704 so as to switch the transmitters and receivers alternately to the antenna. The generation of the TX/RX clock signal will be described later with reference to Figure 8.

The operations of the timing and radio unit are controlled by a microprocessor 709, which may be e.g. of the type 68HC11. In this specific structure, the RAM buffer memory 708 forms part of the memory space of the processor, wherefore a separate buffering circuit 710 is provided between the framing unit and the microprocessor. The data bus of the processor is connected to the data bus of the framing unit by latch circuits (not shown) contained in the buffering circuit and used as intermediate stores between the memory and the microprocessor. (These latch circuits may be e.g. of the type 74HC373.) When writing into the memory, the microprocessor, in fact, writes data D_Pr and corresponding addresses A_Pr into data latch and address latch circuits. From the buffering circuit, data is transmitted into the actual buffer memory under the control of the framing unit when the framing unit uses the signal Pr_WE to give the buffering circuit a permission to write into the buffer memory. When the processor wants to use the common memory, it applies signals Fram_WE and Fram_RE to the framing unit 702, which signals are the processor's write and read requests into the common buffer memory 708.

As the management of the common memory, however, is not directly relevant to the present invention, it will not be described more closely herein.

Data (DD and DU in Figure 6) to be transmitted between the interface unit 701 and the framing unit 702 is made up of GCI frames, the structure of which was described with reference to Figure 7 above. In order that conversion between GCI and CT2 would be possible, normal GCI frames have to be formed into a multiframe structure. This may be done e.g. as shown in Figure 8, i.e. by the use of a multiframe structure made up of 16 normal GCI frames. The synchronization of the multiframe is performed by a synchronization word SYNCW transmitted on the D channel. No other information associated with the multiframe structure need to be transmitted, but synchronization takes place by using the bit clock DCL (2 x bit rate) transferred across the U interface, the frame synchronization signal FSC (8 kHz), and a synchronization word SYNCW received over the D channels. The framing unit 702 contains frame counters (not shown), which count the order number of a frame transferred over the U interface in accordance with the multiframe structure and, within the frame, the order number of a bit received from the subscriber line or transmitted to the subscriber line. The synchronization signal TX/RX (500 Hz) determining the transmit/receive alternation is derived from the signal f₂ by dividing. The concerned frame counters in turn are synchronized (set to zero) by the synchronization word SYNCW, whereby the transmit/receive alternation will be such as shown in Figure 8, i.e. such that the transmission period TX terminates and the reception period RX starts when the frame number 0 has been received from the subscriber line, and the following transmission period TX starts again when the frame number 8 has been received.

In the multiframe, the D channels are divided into six consecutive portions. The first four portions contain the D channel from and to the radios 1 to 4 in the CT2 format. Then follows a telecommunication channel (frames 8 to 11) between the base station and the timing and radio unit, indicated with the reference numeral 901. The last eight bits (frames 12 to 15) contain the above-mentioned multiframe synchronization word SYNCW, which determines the synchronization of the frame counters of the framing units. (Transmission according to both multiplex 1.2 and multiplex 1.4 can be carried out as described above.)

If more capacity is to be made available for communication between the base station and the timing and radio unit, it might be possible that the synchronization word is not transmitted during each multiframe period, but, for instance, only at each fourth time. The maintenance of synchronization could be monitored e.g. by one bit, that is, if the last bit of the synchronization word is one, zero is transmitted in place of the last bit when the entire synchronization word is not transmitted.

On the telecommunication channel 901 between the base station and the timing and radio unit, the base station is able to indicate the radio e.g. of channel data, i.e. indicate which channel is assigned to the radio. Correspondingly, the timing and radio unit can use the telecommunication channel to give the base station information about signal level on a specific channel. In this way, the base station is able to transfer the subscriber to the area of the cell having the highest signal strength (handover function).

In the speech transfer state, the data of four speech channels is transmitted on channels B1 to B4 shown in Figure 8, each one of which contains 4 bits. In the speech transfer state, both of the 8-bit channels of the GCI frame (Figure 7) are thus divided between two speech channels. It is further to be noted that the interface unit does not change the data frame structure, but data passing on the subscriber line has the frame and multiframe structure shown in Figure 8.

The framing unit 702 performs the protocol conversion from GCI to CT2 on generating addresses at which data received over the subscriber line is stored in the buffer memory 708. The data is thus stored in advance in such an order that when the contents of the memory positions are read consecutively into the transmitter, the data will be arranged in the right order, i.e. in the order required by the CT2 protocol. In the reverse direction, i.e. on receiving data from the receivers, the framing unit stores the data in the memory in the order in which it is received, and only when the data is transmitted over the subscriber line, forms the read addresses, so that relevant data (complying with the GCI format) will always be read into the transfer register (not shown) to be transmitted.

As the transmission capacity required by the four CT2 channels corresponds to the capacity of the ISDN basic access, each timing and radio unit contains preferably four radios (four transmitters TX1 to TX4, and four receivers RX1 to RX4). However, it has to be possible to pack these four CT2 channels in a reasonable manner into the 2B+D format corresponding with the ISDN basic access. When calls are in the speech transfer state, one half of the capacity of both of the B channels can be allocated to the speech transfer of one call while the required signalling is transmitted on the D channel. The problem itself occurs at the call establishment stage, as one CT2 connection needs the 16-kbit/s D channel during connection establishment, while calls in progress need all the time 1 to 2 kbit/s of the capacity of the D channel. However, speech need not be transmitted at that stage of the connection establishment when 16 kbit/s of the capacity of the D channel is needed, so that the B channel can be used for data transmission during connection establishment. As the length of multiplex 2 used in connection establishment is 66 bits for the D and SYN channels (cf. Figure 3), it cannot be fitted in the B channel as such. In principle, it could be possible to transfer multiplex 2 in the same way as multiplex 1.2 (cf. Figure 2a) and multiplex 1.4 (cf. Figure 2a), which transfer speech, whereas the first and last bit or 2 bits are transmitted to the D channel when the other bits are passed to the B channel. This arrangement can be implemented on transferring a frame complying with multiplex 3 and transmitted by a handset, as the first and last bits (one or two) are thereby not decisive for the understanding of the message. In other words, the first and last bit or 2 bits of each period of 1 ms (66 or 68 bits, when the empty guard bits at the start and end of the period are not taken into account) is/are thus transmitted on the D channel of the subscriber line and the remaining bits on the B channel of the subscriber line. This, however, is not possible in the case of multiplex 2, where the first and last bit form part of 16-bit words, and when the delays of the B and D channels are different from each other, it would be very difficult to reassemble the data words at the base station.

According to the invention, the problem is solved by shaping the SYN channel contained in multiplex 2 in the shaping units 711 and 712. As shown in Figure 3, the SYN channel contains a 24-bit code word and a 10-bit preamble 31, which together form a 34-bit fixed bit pattern. However, the code word has to be of a predetermined format, so that it is not worth shaping. (This is due to the fact that the code word has been selected so that it meets certain auto- and cross-correlation requirements, which probably will not be met if the word is changed.) The preamble, on the contrary, is a fixed, known bit pattern (1010101010), the significance of which lies mainly in that it facilitates the bit synchronization of the receiver. Accordingly, the preamble can well be shortened after reception.

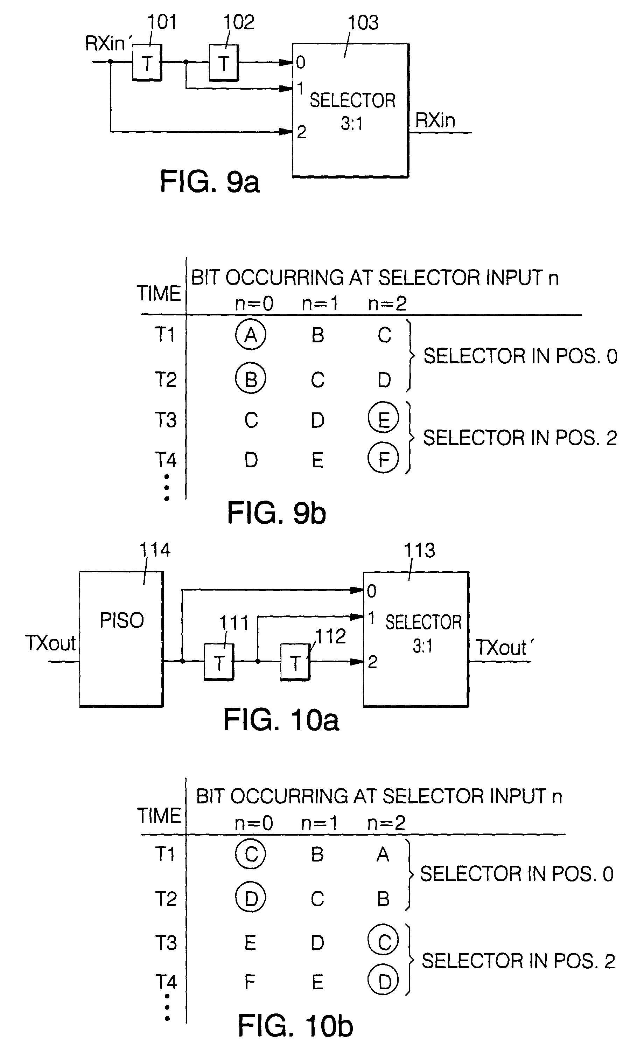

Figure 9a shows the first shaping circuit 711, which shortens the preamble contained in the SYN channel by two bits so that the frame could be fitted in the ISDN-B channel. The shaping circuit comprises a delay line with two successive delay units 101 and 102 and a 3:1 selector 103. The delay of both of the delay units corresponds to the length of one bit. Data RXin' from the radios is applied both to the input of the first delay unit and to a selector input 2. From between the delay units, data is connected to a selector input 1, and from the output of the latter delay unit 102 to a selector input 0.

The operation of the shaping circuit 711 is illustrated in Figure 9b, where the first column describes time at intervals of one bit (T1 to T4), and the next three columns describe bits occurring at the selector inputs when a bit sequence ABCDEF..., etc., is used as an example. At T1, bit A appears at selector input 0, bit B at input 1, and bit C at input 2. At T2, the bit sequence has moved onwards, whereby bit B appears at selector input 0, bit C at input 1, and bit D at input 2. Correspondingly, at T3, bits CDE appear at the inputs, and at T4, bits DEF, etc. At T1 and T2, the selector is in position 0, whereby bits A and B appear at the selector output. The selector is then moved to position 2, whereby bits E and F appear at its output. Bits C and D have thus been removed from the output signal of the selector. The bits occurring at the selector output are circled in Figure 9b.

Figure 10a shows the second shaping circuit 712, which lengthens the preamble 31 of the SYN channel contained in multiplex 2 by two bits before transmission so that a standard CT2 handset would understand the transmission. The shaping circuit 712 comprises a delay line with two successive delay units 111 and 112, and a 3:1 selector 113. The delay of both of the delay units still corresponds to the length of one bit. Data from a Parallel in Serial Out (PISO) transformer 114 is applied both to the input of the first delay unit and to a selector input 0. From between the delay units, data is connected to a selector input 1, and from the output of the latter delay unit to a selector input 2.

The operation of the shaping circuit 712 is illustrated in Figure 10b, where the first column describes time at intervals of one bit (T1 to T4), and the next three columns describe bits occurring at the selector inputs when a bit sequence ABCDEF..., etc., is used as an example. At T1, bit C appears at selector input 0, bit B at input 1, and bit A at input 2. At T2, the bit sequence has moved onwards, whereby bit D appears at selector input 0, bit C at input 1, and bit B at input 2. Correspondingly, at T3, bits EDC appear at the inputs, and at T4, bits FED, etc. At T1 and T2, the selector is in position 0, whereby bits C and D appear at the selector output. The selector is then moved to position 2, whereby bits C and D appear at its output. Bits C and D have thus been duplicated in the output signal of the selector. The bits occurring at the selector output are circled in Figure 10b.

In the shaping circuit 712, the selector is in position 1 when normal speech is transmitted (multiplex 1). The three-position selector is needed as the bit sequence complying with multiplex 2 has to be extended uniformly, i.e. the beginning has to be "advanced" by one bit (position 0) with respect to multiplex 1, whereas the end portion has to be delayed by one bit (position 2) so that two extra bits could be fitted in the bit sequence. If this is not done, the bit sequence of multiplex 2 will have a phase shift with respect to the bit sequence of multiplex 1, and thus the transmission would not comply with the CT2 standard. The same principle applies in reverse to the shortening performed by the shaping circuit 711.

The shaping circuits 711 and 712 are informed over the telecommunication channel 901 when the radio uses multiplex 2, where the lengthening and shortening are performed. It is further to be noted that in the speech transfer state, speech data is transmitted on the B channels and signalling on the D channel.

The solution according to the invention allows the D channel of the CT2 system to be transmitted during call establishment in the B channel of the ISDN subscriber line without difficulties; on the other hand, the D channel of the subscriber line need to be used only in the speech transfer state, so that at least 8 kbit/s of the capacity of the D channel of the subscriber line remains unused. This extra transmission capacity is utilized for the transmission of synchronization and control information as described with reference to Figure 8.

Even though the invention has been described with reference to the examples shown in the attached drawings, it is self-evident that the invention is not limited to it, but it may be modified within the inventive idea disclosed above and in the attached claims. For instance, it is not essential to the invention over which ISDN interface the transmission takes place, but it is more important that the transmission takes place to the ISDN basic access and from the ISDN basic access. Nor is it essential to the invention which ones of the bits of the fixed bit pattern are removed or duplicated or what is the number of these bits, provided that they are at least two. The maximum number of simultaneous calls need not necessarily be four, although a number below this will cause reduction in capacity. Bits may also be removed and duplicated in a number of different ways. The above-described combination of a delay line and selector, however, is a simple and easy way to implement these functions.

### References:

[1]. BS6833: Parts 1&2: 1987 Apparatus using cordless attachments (excluding cellular radio apparatus) for connecting to analogue interfaces of public switched telephone networks.
[2]. MPT 1334: December 1987, Performance specification. Radio equipment for use at fixed and portable stations in the Cordless Telephone service operating in the band 864 to 868 MHz.
[3]. MPT 1375: May 1989, Common Air Interface Specification to be used for the interworking between cordless telephone apparatus.
[4]. MPT 1317: 1981, Transmission of digital information over Land Mobile Radio Systems.
[5]. Evans M. W., CT2 Common Air Interface. British Telecommunications Engineering, July 1990, Vol.9.
[6]. Group of Four documentation for Contract Module Number 3 General Circuit Interface (GCI), Issue 1.0, March 1989

## Claims

1. Method of adapting CT2 calls for a subscriber line (504) having a channel structure corresponding to an ISDN basic access (2B+D), wherein speech is transmitted in the speech transfer state on the B channels of the subscriber line, and data associated with the speech is transmitted on the D channel of the subscriber line, **characterized in that** the B channel of the subscriber line is further used for data transmission during connection establishment by shaping a predetermined, fixed bit pattern of a SYN channel contained in multiplex 2 used in the CT2 telephone system, said shaping comprising shortening of said bit pattern by at least two bits when CT2 calls are transmitted to the ISDN basic access, and lengthening of said bit pattern by at least two bits when CT2 calls are transmitted from the ISDN basic access.

2. Method according to claim 1, **characterized in that** a preamble (31) of the SYN channel is subjected to the shaping.

3. Method according to claim 2, **characterized in that** when CT2 calls are transmitted to the ISDN basic access, said preamble (31) is shortened by at least two bits.

4. Method according to claim 3, **characterized in that** when CT2 calls are transmitted from the ISDN basic access, said preamble (31) that has already been shortened is lengthened by at least two bits.

5. Method according to claim 1, **characterized in that** four calls are adapted for the ISDN basic access.

6. Method according to claim 1, **characterized in that** when the delays of the B and D channels are unequal, the delay difference between them is left undetermined.

7. Equipment for adapting CT2 calls for a subscriber line (504) having a channel structure corresponding to an ISDN basic access (2B+D), the equipment comprising means (701, 702) for performing conversion between the CT2 and ISDN formats, **characterized in that** it comprises means (711, 712) for shaping a predetermined, fixed bit pattern of a SYN channel contained in multiplex 2 used in the CT2 system, said shaping comprising shortening of said bit pattern by at least two bits when CT2 calls are transmitted to the ISDN basic access, and lengthening of said bit pattern by at least two bits when CT2 calls are transmitted from the ISDN basic access.

8. Equipment according to claim 7, **characterized** in that the shaping means (711; 712) comprise a delay line (101, 102; 111, 112) corresponding to the length of at least two bits, and a selector (103; 113), to the inputs of which a signal is connected from at least three points of the delay line, a delay corresponding to the length of at least two bits occurring between said points.

9. Equipment according to claim 8, **characterized in that** the selector (103; 113) comprises at least three inputs (0, 1, 2), the output signal being selected from said inputs.

10. Equipment according to claim 7, **characterized in that** the shaping means (711; 712) are arranged at the subscriber end of the subscriber line (504), and that the equipment comprises at least one base station (501) positioned at the exchange end of the subscriber line (504), whereby the CT2 processing can be transferred over the subscriber line (504) to the base station in all call states.

## Patentansprüche

1. Verfahren zur Anpassung von CT2-Rufen an eine Teilnehmerleitung (504) mit einer einem ISDN-Basiszugang (2B + D) entsprechenden Kanalstruktur, wobei Sprache in dem Sprachtransferzustand auf den B-Kanälen der Teilnehmerleitung übertragen wird und der Sprache zugeordnete Daten auf dem D-Kanal der Teilnehmerleitung übertragen werden, **dadurch gekennzeichnet, dass** der B-Kanal der Teilnehmerleitung zudem zur Datenübertragung während eines Verbindungsaufbaus verwendet wird, indem ein vorbestimmtes, festes Bitmuster eines SYN-Kanals, der in einem in dem CT2-Telefonsystem verwendeten Multiplex-2 enthalten ist, gestaltet wird, wobei dieses Gestalten das Kürzen des Bitmusters um zumindest zwei Bits umfasst, wenn CT2-Rufe zu dem ISDN-Basiszugang übertragen werden, und das Verlängern des Bitmusters um zumindest zwei Bits umfasst, wenn CT2-Rufe von dem ISDN-Basiszugang übertragen werden.

2. Verfahren nach Anspruch 1, **dadurch gekennzeichnet, dass** eine Präambel (31) des SYN-Kanals dem Gestalten unterzogen wird.

3. Verfahren nach Anspruch 2, **dadurch gekennzeichnet, dass** wenn CT2-Rufe zu dem ISDN-Basiszugang übertragen werden, die Präambel (31) um zumindest zwei Bits gekürzt wird.

4. Verfahren nach Anspruch 3, **dadurch gekennzeichnet, dass** wenn CT2-Rufe von dem ISDN-Basiszugang übertragen werden, die bereits gekürzte Präambel (31) um zumindest zwei Bits verlangert wird.

5. Verfahren nach Anspruch 1, **dadurch gekennzeichnet, dass** der ISDN-Basiszugang für vier Rufe angepasst ist.

6. Verfahren nach Anspruch 1, **dadurch gekennzeichnet, dass** wenn die verzögerungen der B- und D-Kanäle ungleich sind, die Vcrzöaerunasdifferenz zwischen diesen unbestimmt bleibt.

7. Vorrichtung zur Anpassung von CT2-Rufen an eine Teilnehmerleitung (504) mit einer einem ISDN-Basiszugang (2B + D) entsprechenden Kanalstruktur, wobei die Vorrichtung Einrichtungen (701, 702) zum Durchführen einer Umwandlung zwischen den CT2- und ISDN-Formaten aufweist, **dadurch gekennzeichnet, dass** sie Einrichtungen (711, 712) zum Gestalten eines vorbestimmten, festen Bitmusters eines SYN-Kanals aufweist, welcher in einem bei dem CT2-System verwendeten Multiplex-2 enthalten ist, wobei das Gestalten das Kürzen des Bitmusters um zumindest zwei Bits aufweist, wenn CT2-Rufe zu dem ISDN-Basiszugang übertragen werden, und das Verlängern des Bitmusters um zumindest zwei Bits aufweist, wenn CT2-Rufe von dem ISDN-Basiszugang übertragen werden.

8. Vorrichtung nach Anspruch 7, **dadurch gekennzeichnet, dass** die Gestaltungseinrichtung (711, 712) eine Verzögerungsleitung (101, 102; 111, 112) entsprechend der Länge von zumindest zwei Bits aufweist, und eine Auswahleinrichtung (103, 113) aufweist, an deren Eingängen ein Signal von zumindest drei Punkten der Verzögerungsleitung angeschlossen ist, wobei eine der Länge von zumindest zwei Bits entsprechende Verzögerungen zwischen den Punkten auftritt.

9. Vorrichtung nach Anspruch 8, **dadurch gekennzeichnet, dass** die Auswahleinrichtung (103, 113) zumindest drei Eingänge (0, 1, 2) aufweist, wobei das Ausgangssignal aus diesen Eingängen ausgewählt wird.

10. Vorrichtung nach Anspruch 7, **dadurch gekennzeichnet, dass** die Gestaltungseinrichtung (711, 712) an dem teilnehmerseitigen Ende der Teilnehmerleitung (504) angeordnet ist, und dass die Vorrichtung zumindest eine an dem vermittlungsseitigen Ende der Teilnehmerleitung (504) positionierte Basisstation (501) aufweist, wodurch die CT2-Verarbeitung über die Teilnehmerleitung (504) zu der Basisstation in allen Rufzuständen transferiert werden kann.

## Revendications

1. Procédé d'adaptation des appels CT2 pour une ligne d'abonné (504) ayant une structure de canal correspondant à un accès basique ISDN (2B + D), dans laquelle la parole est transmise dans un état de transfert vocal sur les canaux B de la ligne d'abonné, et des données associées à la parole sont transmises sur le canal D de la ligne d'abonné,
**caractérisé en ce que** le canal B de la ligne d'abonné est, en outre, utilisé pour la transmission de données pendant l'établissement de la connexion par la mise en forme d'un échantillon prédéterminé de bits fixés d'un canal SYN contenu dans un multiplex 2 utilisé dans le système téléphonique CT2, ladite mise en forme comprenant la diminution dudit échantillon de bits d'au moins deux bits quand des appels CT2 sont transmis à l'accès basique ISDN, et l'allongement dudit échantillon de bits d'au moins deux bits quand des appels CT2 sont transmis depuis l'accès basique ISDN.

2. Procédé selon la revendication 1,
**caractérisé en ce qu'**un préambule (31) du canal SYN est sujet à la mise en forme.

3. Procédé selon la revendication 2,
**caractérisé en ce que** quand des appels CT2 sont transmis à l'accès basique ISDN, ledit préambule (31) est diminué d'au moins deux bits.

4. Procédé selon la revendication 3,
**caractérisé en ce que** quand des appels CT2 sont transmis depuis l'accès basique ISDN, ledit préambule (31), qui a déjà été diminué, est allongé d'au moins deux bits.

5. Procédé selon la revendication 1,
**caractérisé en ce que** quatre appels sont adaptés pour l'accès basique ISDN.

6. Procédé selon la revendication 1,
**caractérisé en ce que** quand les retards des canaux B et D sont inégaux, la différence de retard entre eux est laissée indéterminée.

7. Equipement pour adapter des appels CT2 pour une ligne d'abonné (504) ayant une structure de canal correspondant à un accès basique ISDN (2B + D), l'équipement comprenant des moyens (701, 702) pour réaliser la conversion entre les formats CT2 et ISDN,
**caractérisé en ce qu'**il comprend des moyens (711, 712) pour mettre en forme un échantillon prédéterminé de bits fixés d'un canal SYN contenu dans un multiplex 2 utilisé dans le système CT2, ladite mise en forme comprenant une diminution dudit échantillon de bits d'au moins deux bits quand des appels CT2 sont transmis à l'accès basique ISDN, et l'allongement dudit échantillon de bits d'au moins deux bits quand des appels CT2 sont transmis depuis l'accès basique ISDN.

8. Equipement selon la revendication 7,
**caractérisé en ce que** les moyens de mise en forme (711 ; 712) comprennent une ligne de retard (101, 102 ; 111, 112) correspondant à la longueur d'au moins deux bits, et un sélecteur (103 ; 113), aux entrées duquel un signal est connecté depuis au moins trois points de la ligne de retard, un retard correspondant à la longueur d'au moins deux bits se produisant entre lesdits points.

9. Equipement selon la revendication 8,
**caractérisé en ce que** le sélecteur (103 ; 113) comprend au moins trois entrées (0, 1, 2), le signal de sortie étant sélectionné depuis lesdites entrées.

10. Equipement selon la revendication 7,
**caractérisé en ce que** les moyens de mise en forme (711 ; 712) sont disposés à la limite d'abonnement de la ligne d'abonné (504), et que l'équipement comprend au moins une station de base (501) positionnée à la limite de la circonscription de la ligne de l'abonné (504), grâce à quoi le traitement du CT2 peut être transféré sur la ligne d'abonné (504) à la station de base dans toutes les conditions d'appels.
